# EUROPEAN PATENT SPECIFICATION

(11) **EP 3 335 567 B1**
(45) Date of publication and mention of the grant of the patent: **31.07.2024**
(21) Application number: 16834706.0
(22) Date of filing: 05.08.2016
(51) Int. Cl.: A23C 3/03, A23C 3/033, A23C 9/20

(54) **CONTINUOUS PASTEURISER FOR HUMAN MILK**
KONTINUIERLICHER PASTEURISIERER FÜR MUTTERMILCH
PASTEURISATEUR EN CONTINU POUR LAIT HUMAIN

(30) Priority: 11.08.2015 ES 201531186
(43) Date of publication of application: 20.06.2018
(73) Proprietor: FUNDACIÓN PARA LA INVESTIGACIÓN BIOMÉDICA DEL HOSPITAL 12 DE OCTUBRE, 28041 Madrid (ES); Sive Fluid Systems, S.L., 28803 Alcalá de Henares (Madrid) (ES); Probisearch, S.L., 28760 Tres Cantos (Madrid) (ES)
(72) Inventor: ESCUDER VIECO, Diana, D-6ª Planta Avda. Córdoba s/n 28041 Madrid (ES); PALLÁS ALONSO, Carmen Rosa, D-6ª Planta Avda. Córdoba s/n 28041 Madrid (ES); SIEGFRIED SELEY, Pablo, 28803 Alcalá de Henares (Madrid) (ES); FERNÁNDEZ ÁLVAREZ, Leonides, 28760 Tres Cantos (Madrid) (ES); RODRÍGUEZ GÓMEZ, Juan Miguel, 28760 Tres Cantos (Madrid) (ES); ESPINOSA MARTOS, Irene, 28760 Tres Cantos (Madrid) (ES)
(74) Representative: Pons Ariño, Angel
(86) International application number: PCT/ES2016/070594
(87) International publication number: WO 2017/025655

(56) References cited:
- EP-A1- 2 974 603
- FR-A1- 2 972 902
- US-A1- 2005 112 257
- US-A1- 2010 294 141
- US-B1- 6 189 440
- GOLDBLUM ET AL: "Rapid high-temperature treatment of human milk", JOURNAL OF PEDIATRICS, MOSBY-YEAR BOOK, ST. LOUIS, MO, US, vol. 104, no. 3, 1 March 1984 (1984-03-01), pages 380 - 385, XP022204067, ISSN: 0022-3476, DOI: 10.1016/S0022-3476(84)81099-9
- DHAR J ET AL: "Pasteurization efficiency of a HTST system for human milk", JOURNAL OF FOOD SCIENCE, WILEY-BLACKWELL PUBLISHING, INC, US, vol. 61, no. 3, 1 January 1996 (1996-01-01), pages 569 - 572,595, XP002152880, ISSN: 0022-1147, DOI: 10.1111/J.1365-2621.1996.TB13160.X
- DATABASE FSTA [online] INTERNATIONAL FOOD INFORMATION SERVICE (IFIS), FRANkFURT-MAIN, DE; CZANK C ET AL: "Simultaneous pasteurization and homogenization of human milk by combining heat and ultrasound: effect on milk quality.", XP002787274, Database accession no. FS-2010-07-Pa1685
- JOURNAL OF DAIRY RESEARCH, vol. 77, no. 2, 2010, pages 183 - 189
- DATABASE BIOSIS [online] BIOSCIENCES INFORMATION SERVICE, PHILADELPHIA, PA, US; April 1999 (1999-04-01), PIMENTEIRA THOMAZ ANA CLAIRE ET AL: "Effects of human milk homogenization on fat absorption in very low birth weight infants", XP002787275, Database accession no. PREV199900257779
- NUTRITION RESEARCH, vol. 19, no. 4, April 1999 (1999-04-01), pages 483 - 492, ISSN: 0271-5317

## Description

### OBJECT OF THE INVENTION

The present invention pertains to the technical field of pasteurisers for human milk.

It describes a pasteuriser exclusively used with human milk which enables pasteurisation to take place at high temperatures and for short periods of time in a system that continuously operates in order to cover the true needs and requirements of a donated human milk bank.

### BACKGROUND OF THE INVENTION

Human milk is an idea food for all newborns up to six months of life, especially for premature or sick infants or infants with a very low birth weight.

Unfortunately, milk from their own mother is not always available or, in other situations, the amount produced is not enough to cover the needs of the newborn. In these cases, leading international bodies committed to the health of the infant population, such as the WHO and UNICEF, as well as other important scientific associations, recommend feeding with human milk donated by other mothers, since it provides important benefits, emphasising the protective effect thereof against necrotising enterocolitis, an improvement in digestive tolerance and a lower cardiovascular risk.

The collection, storage, processing and distribution of the donated milk takes place in human milk banks. One of the most critical aspects to take into account when handling this milk is that is a fluid that is not sterile, and therefore, it can be a vehicle for transmitting bacteria and pathogenic viruses. The possible presence of these microorganisms, along with the difficulty in exhaustively monitoring the lifestyle of the donors, has led to the establishment of the pasteurisation of donated milk as the ideal strategy to ensure the microbiological and health safety thereof.

The normal pasteurisation process in milk banks around the world is known as the Holder method. Said technique consists of heating the milk to 62.5°C for 30 minutes and then cooling it to 4°C in the shortest amount of time possible.

Said thermal treatment is currently carried out in thermal baths at the required temperatures or by means of patented human milk pasteurisers. With regard to the latter pasteurisers, different variations have been found; however, in all cases, the design is a batch process and furthermore it only enables maximum temperatures of the milk to reach 65°C for a few minutes.

The drawbacks associated with the Holder method are, on one hand, a production capacity of pasteurised milk conditioned by the physical limitations of the commercial baths or pasteurisers and, on the other hand, the loss or reduction of some milk components with biological activity, which are attributable to the key benefits of this fluid for the health of newborns.

In recent scientific articles, the convenience of using pasteurisation at high temperatures and for short periods of time (72-75°C for 5-15 seconds) to thermally treat the donated milk in human milk banks was suggested, since it improves the retention of compounds with biological activity (immunoglobulins, enzymes, antioxidants, vitamins, etc.).

These studies have been carried out either with equipment for small volumes (up to approximately 300 ml) based on systems with thermostatic baths, or with pasteurisers from the dairy industry whose design does not fulfil the optimal conditions for human milk nor are they prepared to work with the volumes needed by a milk bank.

Document US6189440B1 discloses a self-contained, continuous flow pasteurizer. Such a pasteurizer comprises a first tank and a second tank interconnected by a pasteurization conduit. A single pump pumps fluids from the first tank to the second tank at a predetermined flow rate. Fluids are heated to their desired pasteurization temperature in a first section of the conduit and are held at this temperature while flowing through a second section of the conduit. Fluids not reaching the desired pasteurization temperature do not pass into the second section of the conduit but are recirculated back to the first tank by a recirculation valve and conduit connected between the first tank and the pasteurization conduit. A third section of the conduit passes through a cooling structure so that the fluid flowing in the conduit will be cooled down from its pasteurization temperature before being deposited in the second tank.

Document EP2974603A1 discloses a pasteurizer comprising a heating section, a thermostatic holding section, and a cooling section. The heating section includes a shell-and-tube heat exchanger, comprising a single tube through which a liquid product to be processed can flow, and an outer shell through which a heating fluid can flow, the tube-side flow and the shell-side flow being in counter-flow configuration. The thermostatic holding section includes a single tube through which the liquid product can flow, provided with thermal insulation. The cooling section includes a shell-and-tube heat exchanger, comprising a single tube through which the liquid product can flow, and an outer shell through which a cooling fluid can flow, the tube-side flow and the shell-side flow being in counter-flow configuration.

As a last document, the Institute of Food Technologists published the article "Pasteurization Efficiency of a HTST System for Human Milk", related to an economical, small scale heat processing device that was studied for rapid and efficient pasteurization of human milk while preserving immunoglobulins A,G and M. Using a continuous flow HTST milk pasteurizer, human milk inoculated with E. coli (10⁶ CFU/mL) or S. aureus (10⁷ CFU/mL) was heated at 71°C at flow rates of 5.9, 12.3 and 18.9 mL/ min. All conditions completely inactivated both microorganisms and resulted in negative alkaline phosphatase activity indicating complete pasteurization. Heat processing of bovine milk at 71°C, at 5.9 mL/min resulted in retention of 30% of the γ-glutamyl transpeptidase (GGTP) activity. Lower residual activity could therefore indicate overpasteurization. Pasteurization at 71°C for 9.0 sec (12.3 mL/min) resulted in retention of 74% of IgA, 75% IgG, and 68% IgM.

### DESCRIPTION OF THE INVENTION

The present invention describes a pasteuriser that enables the continuous pasteurisation of human milk at a temperature between 72 and 75°C for a period of 10 to 20 seconds, successfully eliminating the pathogenic microorganisms thereof and improving the nutritional and immunological quality thereof.

This pasteuriser, unlike those that currently exist, enables said continuous thermal treatment to be carried out; it is made up to two tanks, the first to introduce raw human milk and the second to store the pasteurised milk before the packaging thereof. Both tanks incorporate an agitation system regulated by a control unit. The agitation systems operate at a rate of rotation between 90 and 95 rpm to homogenise the milk, preventing the phase separation of this fluid.

The human milk is driven from the first inlet tank to the heating circuit, wherein the thermal treatment takes place. This is carried out by means of a peristaltic pump that has a circular roller mechanism exclusively designed for this equipment. Said pump preferably operates at a rate of rotation of 24 rpm to provide a flow of at least 10 litres/hour.

The pasteurisation of human milk is carried out by means of corrugated tube heat exchangers having countercurrent flow, with two concentric tubes through which the milk and water independently circulate, increasing the rate of thermal exchange by means of this arrangement.

One relevant characteristic of the equipment is that although it operates continuously, the dead volume of human milk loss is very low (approximately 250 ml), since it has been designed to drain itself.

Another component worth noting in the design of the pasteuriser is the integration of a mechanical system for producing coldness capable of decreasing the temperature of the milk when released from the circuit to 2-4°C, which avoids the handling thereof between the heating and cooling phases. Furthermore, it has a manual filling system that enables the human milk to be packaged at the desired volumes.

Lastly, this equipment has a control unit wherein all processes and components involved in the pasteurisation of human milk are regulated.

In order for this pasteuriser to carry out the desired thermal treatment, it is necessary to first sterilise the pasteuriser at a temperature comprised between 80 and 85°C for a period of time of 5 to 15 minutes; next, carry out a stabilisation process to prepare the equipment at the temperatures at which the subsequent heating and cooling of the milk will be carried out. Once this step is completed, the pasteurisation process can now be started, in which the milk reaches a temperature between 72 and 75°C for a period of time of 10 to 20 seconds and cools to a temperature between 2 and 4°C with the aim of destroying the pathogenic microorganisms present therein. Finally, the milk is packaged manually and the pasteuriser is rinsed with water at 50°C to subsequently carry out basic and acid cleaning at a temperature between 70° and 75°C for a time of 30 to 40 minutes with the detergents suitable for each case.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:

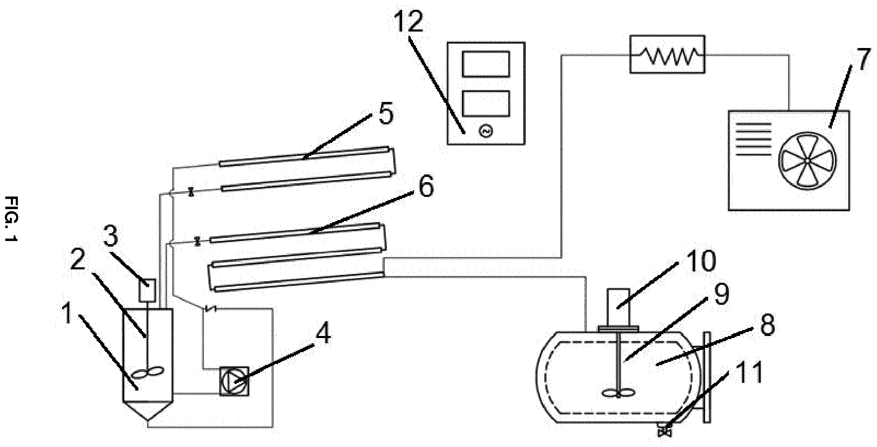

Figure 1 shows a general diagram of the installation, in which all the components thereof are shown.

### PREFERRED EMBODIMENT OF THE INVENTION

Based on Figure 1 mentioned, the preferred embodiment of the pasteuriser, which comprises an inlet tank (1) for raw milk with a first agitation system (2), which is actuated by a first direct current motor (3), is described below. The milk is driven from the inlet tank (1) through a peristaltic pump (4) to the heating circuit (5), which is arranged after the peristaltic pump (4), in which the pasteurisation process takes place at a temperature comprised between 72 and 75°C for a period of 10 to 20 seconds. The first agitation system (2) and the second agitation system (9) preferably operate at a rate of rotation between 90 and 95 rpm which prevents the phase separation of the milk.

Next, the milk passes to the cooling circuit (6) that is arranged after the heating circuit (5). In said cooling circuit (6), it reaches a temperature between 2 and 4°C by means of a mechanical system for producing coldness (7). The pasteurised milk is stored in an aseptic outlet tank (8) with a second agitation system (9) actuated by a second direct current motor (10). Preferably, the aseptic output tank (8) is arranged after the cooling circuit (6). In a preferred embodiment, the pasteuriser further comprises a manual filling system (11) connected to the aseptic outlet tank (8), which enables the human milk to be packaged at the desired volumes. The heating circuit (5), the cooling circuit (6), the peristaltic pump (4) and the agitation systems (2, 9) are controlled by means of a control unit (12).

The heating circuit (5) and the cooling circuit (6) comprise concentric corrugated tube heat exchangers having countercurrent flow.

Likewise, an object of the present invention is the continuous pasteurisation method for human milk in a pasteuriser such as the one previously described. Said method comprises the following steps:
- sterilisation of the pasteuriser at a temperature comprised between 80 and 85°C for a period of 5 to 15 minutes,
- stabilisation to prepare the pasteuriser at the temperatures at which the subsequent heating at 72-75°C and cooling at 2-4°C of the milk will be carried out,
- basic cleaning of the pasteuriser at a temperature between 70°C and 75°C for a period of 30 to 40 minutes,
- acid cleaning of the pasteuriser at a temperature between 70°C and 75°C for a period of 30 to 40 minutes.

## Claims

1. A human milk continuous pasteuriser suitable to enable the continuous pasteurization of human milk at a temperature between 72 to 75ºC for a period od 10 to 20 seconds, **characterized in that** it comprises:
- an inlet tank (1) for raw milk that has a first agitation system (2), configured to achieve a rate of rotation between 90 and 95 rpm for preventing the phase separation of the fluid, and actuated by a first direct current motor (3),
- a peristaltic pump (4) to drive the milk from the inlet tank (1),
- a heating circuit (5) arranged next to the peristaltic pump (4), and comprising one or more corrugated tube heat exchangers,
- a cooling circuit (6) that comprises a mechanical system for producing coldness (7), adapted to decrease the temperature of the milk to 2-4ºC, and comprising one or more corrugated tube heat exchangers, and that is arranged after the heating circuit (5),
- an aseptic outlet tank (8) with a second agitation system (9), configured to achieve a rate of rotation between 90 and 95 rpm for preventing the phase separation of the milk, and actuated by a second direct current motor (10) and that is arranged after the cooling circuit (6),
- a control unit (12) configured to control the heating circuit (5), the cooling circuit (6), the peristaltic pump (4) and the agitation systems (2, 9),
wherein the corrugated tube heat exchangers of the heating circuit (5) and the cooling circuit (6) are concentric corrugated tube heat exchangers having countercurrent flow.

2. The human milk continuous pasteuriser according to claim 1, **characterized in that** the peristaltic pump (4) comprises a circular roller mechanism that operates at a rate of rotation of 24 rpm, enabling a milk flow of at least 10 litres/hour to be pasteurised.

3. The human milk continuous pasteuriser according to claim 1, **characterized in that** further comprises a manual filling system (11) connected to the aseptic outlet tank (8).

4. A continuous pasteurisation method for human milk in a pasteuriser such as the one described in one of claims 1 to 3, **characterized in that** it comprises the steps of:
- sterilisation of the pasteuriser at a temperature comprised between 80 and 85°C for a period of 5 to 15 minutes,
- stabilisation to prepare the pasteuriser at the temperatures at which the subsequent heating at 72-75°C and cooling at 2-4°C of the milk will be carried out,
- basic cleaning of the pasteuriser at a temperature between 70°C and 75°C for a period of 30 to 40 minutes,
- acid cleaning of the pasteuriser at a temperature between 70°C and 75°C for a period of 30 to 40 minutes.

## Patentansprüche

1. Kontinuierlicher Pasteurisierer für Muttermilch, der geeignet ist, um die kontinuierliche Pasteurisierung von Muttermilch bei einer Temperatur zwischen 72 und 75 °C für eine Dauer von 10 bis 20 Sekunden zu ermöglichen, **dadurch gekennzeichnet, dass** er Folgendes umfasst:
- einen Einlasstank (1) für Rohmilch, der ein erstes Rührsystem (2) aufweist, das konfiguriert ist, um eine Drehzahl zwischen 90 und 95 U/min zu erreichen, um die Phasentrennung des Fluids zu verhindern, und das durch einen ersten Gleichstrommotor (3) angetrieben wird,
- eine Schlauchpumpe (4) zum Fördern der Milch aus dem Einlasstank (1),
- einen Heizkreislauf (5), der neben der Schlauchpumpe (4) angeordnet ist und einen oder mehrere Wellrohrwärmetauscher umfasst,
- einen Kühlkreislauf (6), der ein mechanisches Kälteerzeugungssystem (7) umfasst, das angepasst ist, um die Temperatur der Milch auf 2-4 °C zu senken, und der einen oder mehrere Wellrohrwärmetauscher umfasst, und der dem Heizkreislauf (5) nachgeordnet ist,
- einen aseptischen Auslasstank (8) mit einem zweiten Rührsystem (9), das konfiguriert ist, um eine Drehzahl zwischen 90 und 95 U/min zu erreichen, um die Phasentrennung der Milch zu verhindern, und das durch einen zweiten Gleichstrommotor (10) angetrieben wird und das dem Kühlkreislauf (6) nachgeordnet ist,
- eine Steuereinheit (12), die konfiguriert ist, um den Heizkreislauf (5), den Kühlkreislauf (6), die Schlauchpumpe (4) und die Rührsysteme (2, 9) zu steuern,
wobei die Wellrohrwärmetauscher des Heizkreislaufs (5) und des Kühlkreislaufs (6) konzentrische Wellrohrwärmetauscher mit Gegenströmung sind.

2. Kontinuierlicher Pasteurisierer für Muttermilch gemäß Anspruch 1, **dadurch gekennzeichnet, dass** die Schlauchpumpe (4) einen kreisförmigen Walzenmechanismus umfasst, der mit einer Drehzahl von 24 U/min arbeitet, wodurch ein Milchfluss von mindestens 10 Litern/Stunde pasteurisiert werden kann.

3. Kontinuierlicher Pasteurisierer für Muttermilch gemäß Anspruch 1, **dadurch gekennzeichnet, dass** er ferner ein manuelles Füllsystem (11) umfasst, das mit dem aseptischen Auslasstank (8) verbunden ist.

4. Kontinuierliches Pasteurisierungsverfahren für Muttermilch in einem Pasteurisierer wie dem in einem der Ansprüche 1 bis 3 beschriebenen, **dadurch gekennzeichnet, dass** es die folgenden Schritte umfasst:
- Sterilisieren des Pasteurisierers bei einer Temperatur zwischen 80 und 85 °C für eine Dauer von 5 bis 15 Minuten,
- Stabilisieren, um den Pasteurisierer auf die Temperaturen vorzubereiten, bei denen das anschließende Erhitzen auf 72-75 °C und Abkühlen auf 2-4 °C der Milch durchgeführt werden soll
- Reinigen des Pasteurisierers mit Base bei einer Temperatur zwischen 70 °C und 75 °C für eine Dauer von 30 bis 40 Minuten,
- Reinigen des Pasteurisierers mit Säure bei einer Temperatur zwischen 70 °C und 75 °C für eine Dauer von 30 bis 40 Minuten.

## Revendications

1. Pasteurisateur en continu de lait humain approprié pour permettre la pasteurisation continue de lait humain à une température comprise entre 72 et 75 °C pendant une durée de 10 à 20 secondes, **caractérisé en ce qu'**il comprend :
- un réservoir d'entrée (1) pour du lait brut qui a un premier système d'agitation (2), conçu pour parvenir à une vitesse de rotation comprise entre 90 et 95 tr/min pour la prévention de la séparation de phases du fluide et actionné par un premier moteur à courant continu (3),
- une pompe péristaltique (4) pour chasser le lait du réservoir d'entrée (1),
- un circuit de chauffage (5) disposé à côté de la pompe péristaltique (4) et comprenant un ou plusieurs échangeurs de chaleur à tubes ondulés,
- un circuit de refroidissement (6) qui comprend un système mécanique pour la production de froid (7), adapté pour diminuer la température du lait à 2 à 4 °C et comprenant un ou plusieurs échangeurs de chaleur à tubes ondulés et qui est disposé après le circuit de chauffage (5),
- un réservoir de sortie aseptique (8) doté d'un second système d'agitation (9), conçu pour parvenir à une vitesse de rotation comprise entre 90 et 95 tr/min pour la prévention de la séparation de phases du lait et actionné par un second moteur à courant continu (10) et qui est disposé après le circuit de refroidissement (6),
- une unité de commande (12) conçue pour commander le circuit de chauffage (5), le circuit de refroidissement (6), la pompe péristaltique (4) et les systèmes d'agitation (2, 9),
dans lequel les échangeurs de chaleur à tubes ondulés du circuit de chauffage (5) et du circuit de refroidissement (6) sont des échangeurs de chaleur à tubes ondulés concentriques ayant une circulation à contre-courant.

2. Pasteurisateur en continu de lait humain selon la revendication 1, **caractérisé en ce que** la pompe péristaltique (4) comprend un mécanisme à rouleaux circulaires qui fonctionne à une vitesse de rotation de 24 tr/min, permettant de pasteuriser un débit de lait d'au moins 10 litres/heure.

3. Pasteurisateur en continu de lait humain selon la revendication 1, **caractérisé en ce qu'**il comprend en outre un système de remplissage manuel (11) raccordé au réservoir de sortie aseptique (8).

4. Procédé de pasteurisation en continu pour du lait humain dans un pasteurisateur tel que celui décrit dans l'une des revendications 1 à 3, **caractérisé en ce qu'**il comprend les étapes de :
- stérilisation du pasteurisateur à une température comprise entre 80 et 85 °C pendant une durée de 5 à 15 minutes,
- stabilisation pour préparer le pasteurisateur aux températures auxquelles sera effectué le chauffage subséquent à 72 à 75 °C et le refroidissement à 2 à 4 °C du lait
- nettoyage basique du pasteurisateur à une température comprise entre 70 °C et 75 °C pendant une durée de 30 à 40 minutes,
- nettoyage acide du pasteurisateur à une température comprise entre 70 °C et 75 °C pendant une durée de 30 à 40 minutes.
